(19) Europäisches Patentamt / European Patent Office / Office européen des brevets

(11) EP 4 246 417 A1

(12) EUROPEAN PATENT APPLICATION
published in accordance with Art. 153(4) EPC

(43) Date of publication:
20.09.2023 Bulletin 2023/38

(51) International Patent Classification (IPC):
G06Q 50/08 (2012.01)    G06Q 30/06 (2023.01)
G06F 16/9035 (2019.01)    G06F 16/906 (2019.01)

(21) Application number: 21907040.6

(22) Date of filing: 14.12.2021

(52) Cooperative Patent Classification (CPC):
G06F 16/9035; G06F 16/906; G06Q 30/06;
G06Q 50/08

(86) International application number:
PCT/KR2021/018932

(87) International publication number:
WO 2022/131736 (23.06.2022 Gazette 2022/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 14.12.2020 KR 20200174313

(71) Applicant: Urbanbase Inc.
Seoul 06614 (KR)

(72) Inventor: YUN, Dae Hee
Seoul 02008 (KR)

(74) Representative: BCKIP Part mbB
Siegfriedstraße 8
80803 München (DE)

(54) METHOD AND DEVICE FOR RECOMMENDING OBJECT FEATURE VIA EXISTING OBJECT ANALYSIS BASED ON BIG DATA OF INTERIOR DESIGN SERVICE

(57) According to one embodiment of the present invention, an object recommendation method performed by an object recommendation device may comprise: a step of acquiring big data composed of information on a user using an interior design service, identification information of an interior design object placed by the user, and object information including styles of an object; a step of determining styles of an existing object placed in a virtual space by a first user using the interior design service; an operation of adding up a placement count of each style for the styles of the existing object; and a step of, in a case in which information with respect to a predetermined object to be newly placed in the virtual space of the first user is requested, adjusting a recommendation ratio of each style on the basis of the placement count of each style and recommending the predetermined object.

Fig. 1

## Description

[Technical Field]

The present disclosure relates to a device and method for recommending feature of an object through a pre-placed object based big data of an interior design service.

[Background]

People have a desire to pursue a more beautiful residential environment while conforming to their personalities as they live. To this end, an interior space is simply decorated by arranging new objects in the residential space, or furthermore, interior construction such as replacing wallpaper or flooring and changing the structure of the space is carried out.

Conventionally, for interior construction, a client requests an interior design expert to design an interior space for a residential environment to create a desired space, and the requested interior design expert designs an interior space desired by the customer and presents the design to the customer.

However, as interior design services (e.g., 3D space data platform Urban Base) have been developed that allow users to decorate various interior design elements in a virtual space, users of interior design services are capable of arranging objects and easily replace the flooring/wallpaper in the virtual space in which a living environment of the users is directly transplanted, according to their preference.

Accordingly, users may indirectly experience a real interior space through an interior design service of the virtual space, and are provided with services such as ordering a real interior product that they like or placing an order for interior design linked to actual construction.

[Detailed Description]

[Technical Problem]

The above-described interior design service provides an interior design element such as various types of objects, flooring, and wallpaper to a virtual space of a user such that the user is capable of directly decorating various interior design elements in virtual space.

In interior design, the harmony of style and color of various interior design elements is aesthetically important. In this regard, when an interior design service user is not an interior design expert, it may be difficult to select numerous types of objects, flooring materials, and wallpaper.

Accordingly, an object to be achieved in an embodiment of the present disclosure is to provide a technology for recommending various interior design elements that match an interior space and arranged in a virtual space of the user while showing preference of the user through information on the user.

However, the technical objects to be achieved by the embodiments of the present disclosure are not limited to the above-mentioned objects, and various technical objects may be derived from the contents to be described below within the scope obvious to one of skill in the art.

[Technical Solution]

According to an embodiment of the present disclosure, an object recommendation device includes one or more memories configured to store instructions for performing a predetermined operation, and one or more processors operatively connected to the one or more memories and configured to execute the instructions, wherein the operation performed by the processor includes acquiring big data including information on a user using an interior design service, identification information of an interior object placed by the user, and object information including a style of an object, determining a style of an object that is pre-placed by a first user using an interior design service in a virtual space, counting a number of placements of each style for each style of the pre-placed object, and when information on a predetermined object that is to be newly placed in a virtual space of the first user is requested, calculating a recommendation ratio of each style based on the number of placements for each style and recommending the predetermined object.

The recommending the predetermined object may include, when a number of styles of the pre-placed object is m, calculating a recommendation ratio of each style according to Equation 1 below:

$$[\text{Equation 1}]$$

$$w_p = \frac{1}{1+(\frac{x}{1-x})^{-2}}$$

where $w_p$ is 0 for x = 0 and $w_p$ is 1 for x = 1
(p: natural number satisfying $1 \le P \le m$ , $w_p$ : recommendation ratio of $p^{th}$ style, : number of pth style object placed by first user in virtual space, and n: number of objects placed by first user in virtual space, $x - \frac{K_p}{n}$ ); and

filtering and recommending identification information of the predetermined object corresponding to first to $m^{th}$ styles at a ratio of $w_1$ to $w_m$ among identification information of the predetermined object.

The operation performed by the processor may further include classifying a group of the user based on the user information included in the big data, determining a most aggregated style from the group by counting a number of placements of each style for each style of an object placed in a virtual space by the user in the same group of the classified group, based on information on a first user, determining a first group to which the first group belongs from the classified group, and determining a most aggregated first group from the first group, and the recommending the predetermined object may include, when information on a predetermined object in the virtual space of the first user is requested, adding a preset ratio of a style of the first group to a ratio of $w_1$ to $w_m$ and recommending the predetermined object for each style.

The recommending the predetermined object may include calculating a recommendation ratio of the first style according to Equation 1 below:

[Equation 2]

$$w_x = -\log\left(\frac{n}{\frac{k}{2}+n}\right)$$

where $w_1$ is 1 for n = 0
($w_x$: recommendation ratio of style of first group, n: number of objects placed by first user in virtual space, k: average number of placements of object of users of first group), and

The recommending the predetermined object may include, when information on a predetermined object in the virtual space of the first user is requested, adding a ratio of $w_x$ to a ratio of $w_1$ to $w_m$ and recommending the predetermined object for each style.

The user information may include information on an age, a gender, and an interior design area of the user.

The determining the style of the object may include classifying users that commonly correspond to an age range classified into a predetermined range, a gender, and an interior design area into the same group, counting a number of placements of each style for each style of each object placed in a virtual space by the user of the same group, and determining a style with a highest number of placements as a preferred style in the same group.

The style of the object may be divided into a plurality of styles by classifying attributes of the object based on at least one of a material, a brand, and an atmosphere.

The operation performed by the processor may further include recommending color of the predetermined object based on colors of wallpaper and flooring placed by the first user in the virtual space.

The recommending the color may include recommending color as similar contrast of the color of the wallpaper, color as opposite contrast of the color of the wallpaper, and color as complementary color contrast of the color of the wallpaper, in a predetermined color wheel; and a color group including color as similar contrast of the color of the flooring, color as opposite contrast of the color of the wallpaper, and color complementary color contrast of the color of the wallpaper, in the color wheel, as color of the predetermined object, using the color wheel.

The recommending the color may include preferentially recommending color that is identical or adjacent to color of a pre-placed object in the color group when there is the pre-placed object in the virtual space of the first user.

According to an embodiment of the present disclosure, an object recommendation method performed by an object recommendation device includes acquiring big data including information on a user using an interior design service, identification information of an interior object placed by the user, and object information including a style of an object, determining a style of an object that is pre-placed by a first user using an interior design service in a virtual space, counting a number of placements of each style for each style of the pre-placed object, and when information on a predetermined object that is to be newly placed in a virtual space of the first user is requested, adjusting a recommendation ratio of each style based on the number of placements for each style and recommending the predetermined object.

[Advantageous Effect]

An embodiment of the present disclosure may provide a recommendation technology of reflecting preference of users, a type of objects that are usually placed together by users, and a style of the objects that are usually placed by users by using big data collected while numerous users of an interior design service decorate various interior design elements in their virtual space.

To this end, an embodiment of the present disclosure may recommend an interior design element to be newly placed in a virtual space of a user by using a technology of analyzing association for reflecting a plurality of common preferences and harmonies from information of various users included in big data.

In addition, various effects to be directly or indirectly identified through this document may be provided.

[Brief Description of Drawings]

FIG. 1 is a functional block diagram of an object recommendation device 100 according to an embodiment of the present disclosure.
FIG. 2 is an operation flowchart of an object recommendation method performed by an object recommendation device based on user group analysis according to an embodiment of the present disclosure.
FIG. 3 is an exemplary diagram of a data structure in which identification information of an object is classified based on a style and color according to an embodiment of the present disclosure.

FIG. 4 shows an example (a) of calculating a recommendation ratio based on a user group and an example (b) of calculating a recommendation ratio based on a previously placed object according to an embodiment of the present disclosure.

FIG. 5 is an operation flowchart of an object recommendation method performed by an object recommendation device based on pre-placed object analysis according to an embodiment of the present disclosure.

FIG. 6 is an exemplary view for explaining an operation of recommending a color matching pre-placed wallpaper and flooring using a color wheel according to an embodiment of the present disclosure.

[Best Mode]

The attached drawings for illustrating exemplary embodiments of the present disclosure are referred to in order to gain a sufficient understanding of the present disclosure, the merits thereof, and the objectives accomplished by the implementation of the present disclosure. The present disclosure may, however, be embodied in many different forms and should not be construed as being limited to the embodiments set forth herein; rather, these embodiments are provided so that this disclosure will be thorough and complete, and will fully convey the concept of the present disclosure to one of ordinary skill in the art. Meanwhile, the terminology used herein is for the purpose of describing particular embodiments and is not intended to limit the present disclosure.

In the following description of the present disclosure, a detailed description of known functions and configurations incorporated herein will be omitted when it may make the subject matter of the present disclosure unclear. The terms used in the specification are defined in consideration of functions used in the present disclosure, and can be changed according to the intent or conventionally used methods of clients, operators, and users. Accordingly, definitions of the terms should be understood on the basis of the entire description of the present specification.

The functional blocks shown in the drawings and described below are merely examples of possible implementations. Other functional blocks may be used in other implementations without departing from the spirit and scope of the detailed description. In addition, although one or more functional blocks of the present disclosure are represented as separate blocks, one or more of the functional blocks of the present disclosure may be combinations of various hardware and software configurations that perform the same function.

The expression that includes certain components is an open-type expression and merely refers to existence of the corresponding components, and should not be understood as excluding additional components.

It will be understood that when an element is referred to as being "on", "connected to" or "coupled to" another element, it may be directly on, connected or coupled to the other element or intervening elements may be present.

Expressions such as 'first, second', etc. are used only for distinguishing a plurality of components, and do not limit the order or other characteristics between the components.

Hereinafter, embodiments of the present disclosure will be described with reference to the accompanying drawings.

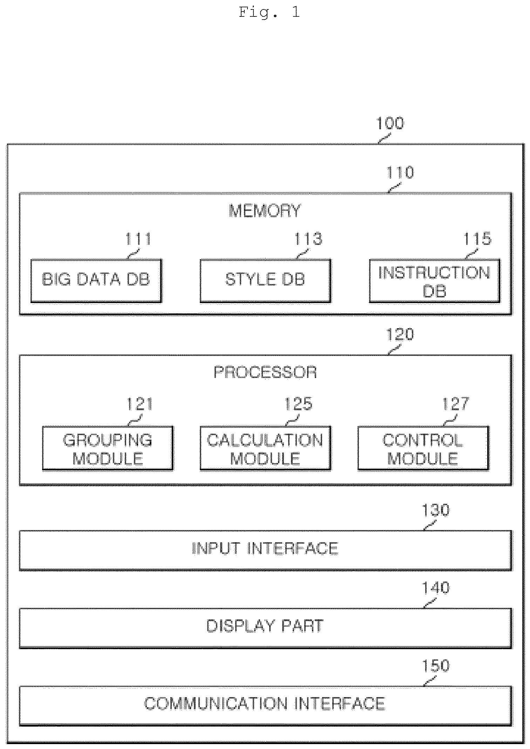

FIG. 1 is a functional block diagram of an object recommendation device 100 according to an embodiment of the present disclosure. Referring to FIG. 1, the object recommendation device 100 according to an embodiment may include a memory 110, a processor 120, an input interface 130, a display part 140, and a communication interface 150.

The memory 110 may include a big data database (DB) 111, a style DB 113, and an instruction DB 115.

The big data DB 111 may include various data collected from an interior design service. The interior design service may include a service that provides a function for decorating a virtual interior design element by transplanting an image of a real space into a three-dimensional virtual space. A user who uses the interior design service may place interior design elements such as object/flooring/wallpaper in the virtual space according to his or her preference. The user using the interior design service may see interior design of a virtual space decorated by other users and respond through an empathy function (e.g., like button). In addition, the number of searches by users for a specific interior design may be counted through the interior design service.

The big data DB 111 may store all information collected from the interior design service as big data. For example, big data may include information on a user of the interior design service, information on an interior space designed by the user, information on a room type of interior design, information on an interior design element placed by the user (e.g., object, wallpaper, and flooring), style information of an interior design element placed by the user, information on user preference, information on evaluation of the user of a specific interior design, and information on the number of times users searches for a specific interior design.

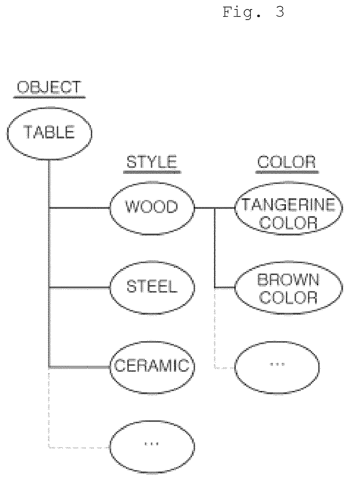

The style DB 113 may store style information or color information of an interior design element included in big data or an interior design element provided by an interior design service. The style information may include identification information for specifying a style of an interior design element such as an object, wallpaper, and flooring, and the color information may include identification information for specifying color of the interior design element such as an object, wallpaper, and flooring. For example, referring to FIG. 3, in the style DB 113, all identification information called "table" provided by the interior design service may be mapped and stored with style information and color information. Accordingly, when information on a specific object is requested by a user, identification information filtered according to style information or color information may be recommended for all identification information of a specific object included in the style DB.

The style information refers to information on object attributes such as a material, a brand, and an atmosphere of an object provided by the interior design service. For example, when the style of an object is classified based on the attribute of material, the style information of the object may be classified into one of a wood style, a steel style, a ceramic style, and a plastic style. However, the classification of the style information is not limited to the above example, and the style of an object may be classified based on various attributes according to settings of an interior design service manager.

The instruction DB 115 may store instructions for performing an operation of the processor 120. For example, the instruction DB 115 may store a computer code for performing operations corresponding to the operation of the processor 120 to be described later.

The processor 120 may control overall operations of components included in the object recommendation device 100, the memory 110, the input interface 130, the display part 140, and the communication interface 150. The processor 120 may include a grouping module 121, a calculation module 125, and a control module 127. The processor 120 may execute the instructions stored in the memory 110 to drive the grouping module 121, the calculation module 125, and the control module 127. Operations performed by the grouping module 121, the calculation module 125, and the control module 127 may be understood as operations performed by the processor 120.

The grouping module 121 may classify users who share common characteristics among users included in the big data into the same group by using information on a user who uses the interior design service, included in the big data.

The calculation module 125 may perform group-based object recommendation by determining which style is frequently used in a group to which the user belongs through big data when the user requests information on a specific object. In addition, the calculation module 125 may analyze an object previously placed in a virtual space of the user and perform object recommendation based on the previously placed object when the user requests information on a specific object.

When the user requests information on a specific object, the control module 127 may output a filtering result of the object identification information stored in the memory 110 based on a recommended ratio of a specific style calculated by the calculation module 125. In addition, the control module 127 may calculate the color of an object to be newly recommended based on the color of the wallpaper and the color of the flooring arranged in the virtual space of the user using the interior design service.

The input interface 130 may receive user input. For example, the input interface 130 may receive an input such as an interior design element selected by a user from an interior design service.

The display part 140 may include a hardware component that includes a display panel and outputs an image.

The communication interface 150 may communicate with an external device (e.g., an external DB server and a user equipment (UE)) to transmit and receive information. To this end, the communication interface 150 may include a wireless communication module or a wired communication module.

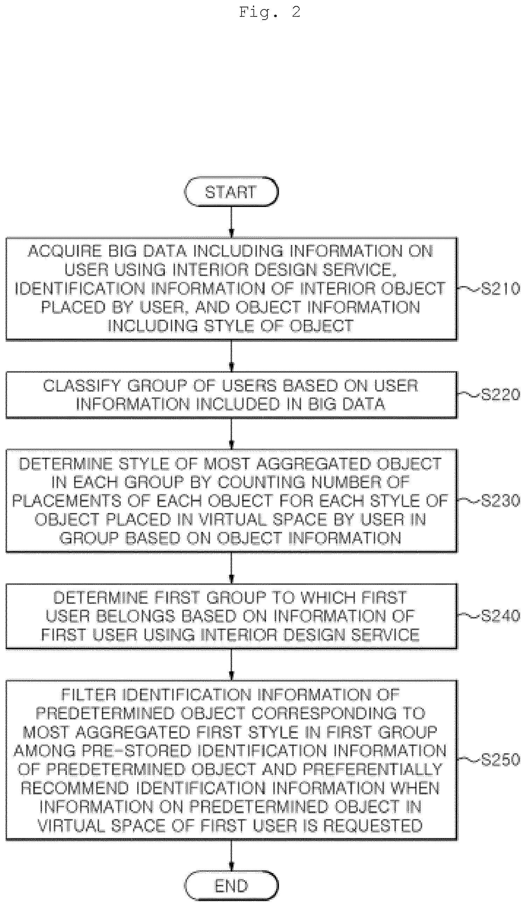

Hereinafter, with reference to FIGS. 2 to 6, an embodiment in which components of the object recommendation device 100 are operatively associated to analyze a group of interior service users and recommend a style of an object to be newly placed by the user, an embodiment in which components of the object recommendation device 100 are operatively associated to analyze a style of objects previously placed in a virtual space of a user and recommend a style of an object to be newly placed by the user, and an embodiment in which components of the object recommendation device 100 are operatively associated to recommend a style of an object to be newly placed by the user based on the color of wallpaper and flooring previously placed in a virtual space of a user will be described.

FIG. 2 is an operation flowchart of an object recommendation method performed by the object recommendation device 100 based on user group analysis according to an embodiment of the present disclosure. Each operation of the object recommendation method according to FIG. 2 may be performed by the components of the object recommendation device 100 described with reference to FIG. 1, and is described as follows.

The big data DB 111 may obtain big data including user information using an interior design service, identification information of an interior object placed by a user, and object information including a style of the object (S210).

The interior design service may store information on interior design elements placed by each user in a virtual space thereof to maintain the information, store the number of times the user tries and decorates the interior design elements, details of the interior design elements placed, information on interior design elements in a virtual space that is finally maintained, and user information, and generate big data by accumulating and storing all such information. The big data DB 111 may acquire and store big data generated from one or more interior design services, and the data may be refined to achieve the purpose of the present disclosure according to subsequent operations.

The grouping module 121 may classify a group of interior design service users based on user information among information included in big data (S220). For example, the grouping module 121 may divide each element into a predetermined range for each element of "age, gender, and interior design area" of user information, and then classify users commonly corresponding to each range of elements into the same group. For example, users belonging to the same range for each element may be classified into the same group by classifying users according to the range set as follows.

<Example of classification>

> Age group - Classified into the range of "10s, 20s, 30s, 40s, 50s, 60s and older"
> Gender - Classified into the range of "men and women"
> Interior design area - Classified into "dong"

The calculation module 125 may determine the most aggregated style in each group by counting the number of placements of each style for each style of object placed in the virtual space by the user in each group based on the object information stored in the big data (S230).

For example, assuming that styles are aggregated based on a "material" of an object for a group belonging to "30s", "women", and "Samseong-dong, Gangnam-gu, Seoul", when the number of placements of each style is counted as "wood style - 340 times", "steel style - 152 times", and "ceramic style - 221 times", the most preferred style in the corresponding group may be determined as "wood style".

The calculation module 125 may determine a first group to which a first user belongs among pre-classified group groups based on information of the first user using an interior design service (S240). For example, the calculation module 125 may determine, as the first group, a group that matches the age and gender of the first user and an area of a virtual space designed by the first user among elements specifying the pre-classified group.

When information on an object to be newly placed in the virtual space of the first user is requested, the control module 127 may filter identification information of an object corresponding to the most aggregated first style in the first group among previously stored object identification information for the corresponding object and recommend the object corresponding to the first style (S250).

At this time, for a recommended operation of S250, when the first user selects and places an object of a second style different from the recommended first style, if the first user additionally requests information on the object, the control module 127 may calculate a recommendation ratio of the first style and the second style based on the number of objects of the second style placed by the user in the virtual space and recommend an additional object.

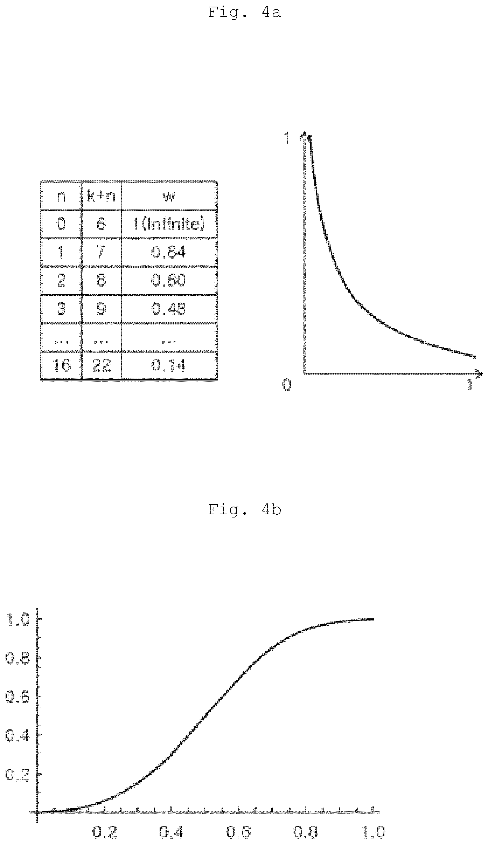

FIG. 4 shows an example (a) of calculating a recommendation ratio based on a user group and an example (b) of calculating a recommendation ratio based on a previously placed object according to an embodiment of the present disclosure.

The calculation module 125 may calculate a recommendation ratio of a first style according to Equation 1 below.

$$[Equation\ 1]$$

$$w_1 = -\log\left(\frac{n}{(k/2)+n}\right)$$

(When n = 0, $w_1$ is 1.)

($w_1$: recommendation ratio of first style, n: number of objects placed by first user in virtual space, and k: average number of placements of objects of first group user)

As seen from FIG. 4, as an example of k = 6, as n increases, a value of $w_1$ decreases. This is because, as the number of objects placed by the first user increases, a recommendation ratio through style analysis of a previously arranged object is considered according to Equation 2 below.

That is, the calculation module 125 may additionally calculate a recommendation ratio of the second style corresponding to a style of a previously placed object according to Equation 2 below.

$$[Equation\ 2]$$

$$w_2 = \frac{1}{1+\left(\frac{x}{1-x}\right)^{-2}}$$

(When x = 0, $w_2$ is 0, and when x = 1, $w_2$ is 1.)

($w_2$: recommendation ratio of second style placed in virtual space, $K_2$: number of second style object placed by first user in virtual space, and n: number of objects placed by first user in virtual space, $x = \frac{k_2}{n}$ )

As described above, as the values of $w_1$ and $w_2$ are calculated, the control module 127 may filter and recommend identification information of an additional object corresponding to the first style and identification information of an additional object corresponding to the second style at a ratio of $w_1 : w_2$ among identification information of corresponding objects for an additionally requested object. For example, when $w_1 : w_2$ = 4:1 (ratio converted to a natural number) and the number of recommendations is preset to 20, if a user requests information on "chair" as an additional object, the control module 127 may filter information on a first style chair as

$$20 * \frac{4}{(4+1)} = 16$$ and filter information on a second style chair as $$20 * \frac{1}{(4+1)} = 4$$ to output the same.

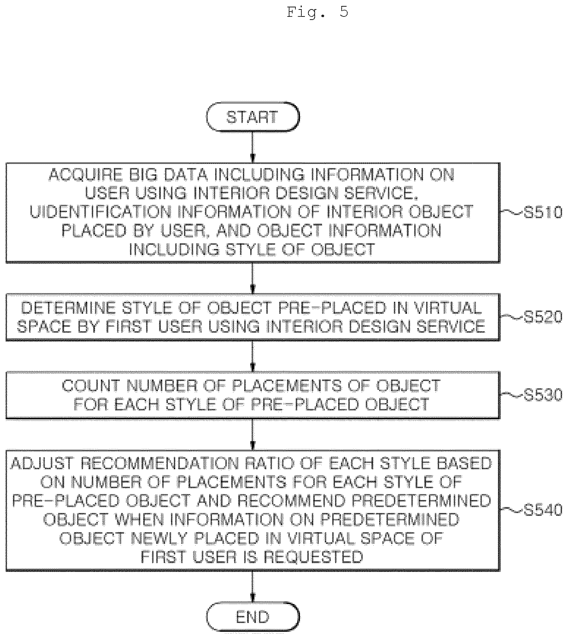

FIG. 5 is an operation flowchart of an object recommendation method performed by the object recommendation device 100 based on pre-placed object analysis according to an embodiment of the present disclosure. Each step of the object recommendation method according to FIG. 5 may be performed by the components of the object recommendation device 100 described with reference to FIG. 1, and each step is described as follows.

The big data DB 111 may store big data including various information collected while the interior design service is provided to the user, such as information on a user using an interior design service, identification information of an interior object placed by the user, and object information including a style of an object (S510).

The calculation module 125 may determine a style of an object pre-placed by the first user using the interior design service in a virtual space (S520). For example, for the object pre-placed in the virtual space, the calculation module 125 may determine style information of the corresponding object with reference to mapping information of FIG. 3.

The calculation module 125 may count the number of placements of each style for each style of pre-placed objects (S530). For example, when there are 3 types of styles of a pre-placed object, a first style to a third style, the number of placements of each style such as "first style - two, second style - one, and third style - three" may be counted.

When information on an object to be newly placed in the virtual space of the first user is requested, the control module 127 may calculate a recommendation ratio of each style based on the number of placements for each style and recommend the object to be newly placed for each style (S540).

For example, when the number of styles of objects pre-placed by the first user in the virtual space is m, the calculation module 125 may calculate a recommendation ratio of each style according to Equation 3 below.

$$w_p = \frac{1}{1 + \left(\frac{x}{1-x}\right)^{-2}}$$

(When x = 0, $w_p$ is 0, and when x = 1, $w_p$ is 1.)

(p is natural number satisfying $1 \leq P \leq m$, $w_p$: recommendation ratio of $p^{th}$ style, $K_p$: number of $p^{th}$ style object placed by first user in virtual space, and n: number of objects placed by first user in virtual space, $x = \frac{K_p}{n}$ )

Accordingly, the control module 127 may filter and recommend identification information of a corresponding object corresponding to a first style to a $m_{th}$ style at a ratio of $w_1$ to $w_m$ among identification information of a newly requested object.

For example, assuming that when the number of styles of a pre-placed object is three, a recommendation ratio of styles calculated according to Equation 3 is $w_1 : w_2 : w_3$ = 2:2:1 (a ratio converted into a natural number), the number of recommendations is preset to 20, and a user requests information on "chair" as a new object, the control module 127 may filter and recommend identification information for each style mapped to a product of "chair" as first style chairs of $$20 * \frac{2}{(2+2+1)} = 8,$$

second style chairs of $$20 * \frac{2}{(2+2+1)} = 8,$$ and third style chairs of $$20 * \frac{1}{(2+2+1)} = 4.$$

In addition, the control module 127 may recommend a new object by reflecting a style preferred by a user group that shares features with the first user. At this time, determination of the first group to which the first user belongs may be performed according to the above-described operation with FIG. 2. Accordingly, when information on a new object is requested in the virtual space of the first user, the control module 127 may add $w_x$ that is a ratio calculated for the first group style to a ratio of $w_1$ to $w_m$ and recommend a new object for each style.

For example, the calculation module 125 may calculate a recommendation ratio of a first group style according to Equation 4 below.

[Equation 4]

$$w_x = -\log\left(\frac{n}{\frac{k}{2} + n}\right)$$

(When n = 0, $w_x$ is 1.)

($w_x$: recommendation ratio of first group style, n: number of objects placed by first user in virtual space, and k: average number of placements of object of first group user)

Accordingly, when information on a new object in a virtual space of a first user is requested, the control module 127 may add a ratio of $w_x$ to a ratio of $w_1$ to $w_m$ and recommend an object requested for each style.

For example, assuming that when the number of styles of a pre-placed object is three, a first group style is an $x^{th}$ style, $w_1:w_2:w_3:w_x$ = 1:2:1:1 (a ratio converted into a natural number), the number of recommendations is preset to 20, and a user requests information on "chair" as a new object, the control module 127 may filter and recommend identification information for each style mapped to a product of "chair" as first style chairs of

$$20*\frac{1}{(1+2+1+1)} = 4,$$ second style chairs of

$$20*\frac{2}{(1+2+1+1)} = 8,$$ third style chairs of

$$20*\frac{1}{(1+2+1+1)} = 4,$$ and $x^{th}$ style styles of

$$20*\frac{1}{(1+2+1+1)} = 4.$$

In this case, when the $x^{th}$ style is the same as any one of the first style to the third style, a recommendation ratio of the $x^{th}$ style calculated through Equation 4 may be added to a recommendation ratio of a style calculated through Equation 3, and when the $x^{th}$ style is not the same as any one of the first style to the third style, a separate recommendation ratio may be considered. For example, when the $x^{th}$ style is a third style, $w_1:w_2:w_3:w_x$ = 1:2:1:1 may be calculated as $w_1:w_2:w_3$ = 1:2:2 by being added to a recommendation ratio of $w_3$. When the $x^{th}$ style is a fourth style, the first to fourth styles may be recommended at a ratio of $w_1:w_2:w_3:w_4$ = 1:2:1:1.

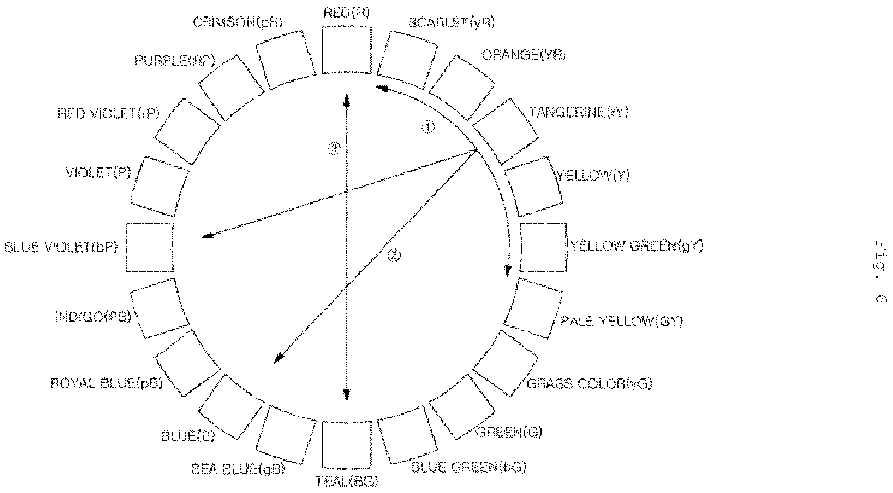

FIG. 6 is an exemplary view for explaining an operation of recommending a color matching pre-placed wallpaper and flooring using a color wheel according to an embodiment of the present disclosure.

Referring to FIG. 6, the control module 127 may recommend a suitable color for an object requested by the first user using a predetermined color wheel (e.g., FIG. 6) based on color of the wallpaper and the color of the flooring placed in the virtual space by the first user.

For example, the control module 127 may extract color as similar contrast of wallpaper color of a virtual space in which an object requested by the first user is to be placed, color as opposite contrast of the wallpaper color, and color as complementary color contrast of the wallpaper color; and a color group including color as similar contrast of flooring of a virtual space in which a requested object is to be placed, color as opposite contrast of the wallpaper color, and color as complementary color contrast of the wallpaper color. After extraction, the control module 127 may recommend color of an object requested by a user in priority order of similar contrast, opposite contrast, and complementary color contrast among the extracted color groups. When there is a pre-placed object in the virtual space of the first user, the control module 127 may preferentially recommend color that is the same as or adjacent to color of the pre-placed object in the extracted color group.

At this time, the similar contrast means color adjacent to a specific color on the color wheel (reference numeral 1 in FIG. 6), the complementary color contrast means color located on an opposite side of the specific color on the color wheel (reference numeral 3 in FIG. 6), and the opposite contrast means color (reference numeral 2 in FIG. 6) adjacent to color located opposite to the specific color.

In the present disclosure, with regard to definition of adjacent colors, the adjacent colors may include colors facing clockwise or counterclockwise with respect to the specific color on the color wheel, and colors placed up to a predetermined number of colors arranged clockwise or counterclockwise from the specific color.

The above-described embodiment may provide a recommendation technology of reflecting preference of users, a type of objects that are usually placed together by users, and a style of the objects that are usually placed by users by using big data collected while numerous users of an interior design service decorate various interior design elements in their virtual space.

To this end, the embodiment of the present disclosure may recommend an interior design element to be newly placed in a virtual space of a user by using a technology of analyzing association for reflecting a plurality of common preferences and harmonies from information of various users included in big data.

The embodiments of the present disclosure may be achieved by various elements, for example, hardware, firmware, software, or a combination thereof.

In a hardware configuration, an embodiment of the present disclosure may be achieved by one or more application specific integrated circuits (ASICs), digital signal processors (DSPs), digital signal processing devices (DSDPs), programmable logic devices (PLDs), field programmable gate arrays (FPGAs), processors, controllers, microcontrollers, microprocessors, and the like.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known elements.

Combinations of blocks in the block diagram attached to the present disclosure and combinations of operations in the flowchart attached to the present disclosure may be performed by computer program instructions. These computer program instructions may be installed in an encoding processor of a general-purpose computer, a special purpose computer, or other programmable data processing equipment, and thus the instructions executed by an encoding processor of a computer or other programmable data processing equipment may create an element for perform the functions described in the blocks of the block diagram or the operations of the flowchart. These computer program instructions may also be stored in a computer-usable or computer-readable memory that may direct a computer or other programmable data processing equipment to implement a function in a particular method, and thus the instructions stored in the computer-usable or computer-readable memory may produce an article of manufacture containing an instruction element for performing the functions of the blocks of the block diagram or the operations of the flowchart. The computer program instructions may also be mounted on a computer or other programmable data processing equipment, and thus a series of operations may be performed on the computer or other programmable data processing equipment to create a computer-executed process, and it may be possible that the computer program instructions provide the blocks of the block diagram and the operations for performing the functions described in the operations of the flowchart.

Each block or each step may represent a module, a segment, or a portion of code that includes one or more executable instructions for executing a specified logical function. It should also be noted that it is also possible for functions described in the blocks or the operations to be out of order in some alternative embodiments. For example, it is possible that two consecutively shown blocks or operations may be performed substantially and simultaneously, or that the blocks or the operations may sometimes be performed in the reverse order according to the corresponding function.

As such, those skilled in the art to which the present disclosure pertains will understand that the present disclosure may be embodied in other specific forms without changing the technical spirit or essential characteristics thereof. Therefore, it should be understood that the embodiments described above are illustrative in all respects and not restrictive. The scope of the present disclosure is defined by the following claims rather than the detailed description, and all changes or modifications derived from the meaning and scope of the claims and their equivalent concepts should be construed as being included in the scope of the present disclosure.

**Claims**

1.   An object recommendation device, comprising:

one or more memories configured to store instructions for performing a predetermined operation; and
one or more processors operatively connected to the one or more memories and configured to execute the instructions,
wherein the operation performed by the processor includes:

acquiring big data including information on a user using an interior design service, identification information of an interior object placed by the user, and object information including a style of an object;
determining a style of an object that is pre-placed by a first user using an interior design service in a virtual space;
counting a number of placements of each style for each style of the pre-placed object; and
when information on a predetermined object that is to be newly placed in a virtual space of the first user is requested, calculating a recommendation ratio of each style based on the number of placements for each style and recommending the predetermined object.

2.   The object recommendation device of claim 1, wherein the recommending the predetermined object includes:

when a number of styles of the pre-placed object is m, calculating a recommendation ratio of each style according to Equation 1 below:

[Equation 1]

$$w_p = \cfrac{1}{1+\left(\cfrac{x}{1-x}\right)^{-2}}$$

where $w_p$ is 0 for x = 0 and $w_p$ is 1 for x = 1.)
(p: natural number satisfying $1 \leq P \leq m$, $w_p$: recommendation ratio of $p^{th}$ style, : number of pth style object placed by first user in virtual space, and n: number of objects placed by first user in

virtual space, $x = \cfrac{K_p}{n}$ ); and
filtering and recommending identification information of the predetermined object corresponding to first to $m^{th}$ styles at a ratio of $w_1$ to $w_m$ among identification information of the predetermined object.

3.   The object recommendation device of claim 2, wherein the operation performed by the processor further includes:

classifying a group of the user based on the user information included in the big data;
determining a most aggregated style from the group by counting a number of placements of each style for each style of an object placed in a virtual space by the user in the same group of the classified group;

based on information on a first user, determining a first group to which the first group belongs from the classified group; and

determining a most aggregated first group from the first group, and

wherein the recommending the predetermined object includes, when information on a predetermined object in the virtual space of the first user is requested, adding a preset ratio of a style of the first group to a ratio of $w_1$ to $w_m$ and recommending the predetermined object for each style.

4. The object recommendation device of claim 3, wherein the recommending the predetermined object includes:

calculating a recommendation ratio of the first style according to Equation 1 below:

[Equation 1]

$$ w_x = \log\left(\frac{n}{\frac{k}{2} + n}\right) $$

where $w_1$ is 1 for n = 0 ($w_x$: recommendation ratio of style of first group, n: number of objects placed by first user in virtual space, k: average number of placements of object of users of first group); and

wherein the recommending the predetermined object includes, when information on a predetermined object in the virtual space of the first user is requested, adding a ratio of $w_x$ to a ratio of $w_1$ to $w_m$ and recommending the predetermined object for each style.

5. The object recommendation device of claim 1, wherein the user information includes information on an age, a gender, and an interior design area of the user.

6. The object recommendation device of claim 5, wherein the determining the style of the object includes:

classifying users that commonly correspond to an age range classified into a predetermined range, a gender, and an interior design area into the same group;

counting a number of placements of each style for each style of each object placed in a virtual space by the user of the same group; and

determining a style with a highest number of placements as a preferred style in the same group.

7. The object recommendation device of claim 1, wherein the style of the object is divided into a plurality of styles by classifying attributes of the object based on at least one of a material, a brand, and an atmosphere.

8. The object recommendation device of claim 1, wherein the operation performed by the processor further includes recommending color of the predetermined object based on colors of wallpaper and flooring placed by the first user in the virtual space.

9. The object recommendation device of claim 8, wherein the recommending the color includes recommending color as similar contrast of the color of the wallpaper, color as opposite contrast of the color of the wallpaper, and color as complementary color contrast of the color of the wallpaper, in a predetermined color wheel; and a color group including color as similar contrast of the color of the flooring, color as opposite contrast of the color of the wallpaper, and color complementary color contrast of the color of the wallpaper, in the color wheel, as color of the predetermined object, using the color wheel.

10. The object recommendation device of claim 9, wherein the recommending the color includes preferentially recommending color that is identical or adjacent to color of a pre-placed object in the color group when there is the pre-placed object in the virtual space of the first user.

11. An object recommendation method performed by an object recommendation device, the method comprising:

acquiring big data including information on a user using an interior design service, identification information of an interior object placed by the user, and object information including a style of an object;

determining a style of an object that is pre-placed by a first user using an interior design service in a virtual space;

counting a number of placements of each style for each style of the pre-placed object; and

when information on a predetermined object that is to be newly placed in a virtual space of the first user is requested, adjusting a recommendation ratio of each style based on the number of placements for each style and recommending the predetermined object.

12. A computer program causing a processor to perform the method of claim 11 and stored in a computer-readable recording medium.

Fig. 1

Fig. 2

START

ACQUIRE BIG DATA INCLUDING INFORMATION ON
USER USING INTERIOR DESIGN SERVICE,
IDENTIFICATION INFORMATION OF INTERIOR OBJECT
PLACED BY USER, AND OBJECT INFORMATION
INCLUDING STYLE OF OBJECT — S210

CLASSIFY GROUP OF USERS BASED ON USER
INFORMATION INCLUDED IN BIG DATA — S220

DETERMINE STYLE OF MOST AGGREGATED OBJECT
IN EACH GROUP BY COUNTING NUMBER OF
PLACEMENTS OF EACH OBJECT FOR EACH STYLE OF — S230
OBJECT PLACED IN VIRTUAL SPACE BY USER IN
GROUP BASED ON OBJECT INFORMATION

DETERMINE FIRST GROUP TO WHICH FIRST
USER BELONGS BASED ON INFORMATION OF — S240
FIRST USER USING INTERIOR DESIGN SERVICE

FILTER IDENTIFICATION INFORMATION OF
PREDETERMINED OBJECT CORRESPONDING TO
MOST AGGREGATED FIRST STYLE IN FIRST GROUP
AMONG PRE-STORED IDENTIFICATION INFORMATION
OF PREDETERMINED OBJECT AND PREFERENTIALLY — S250
RECOMMEND IDENTIFICATION INFORMATION WHEN
INFORMATION ON PREDETERMINED OBJECT IN
VIRTUAL SPACE OF FIRST USER IS REQUESTED

END

Fig. 3

OBJECT

TABLE

STYLE

COLOR

WOOD

TANGERINE COLOR

STEEL

BROWN COLOR

CERAMIC

...

...

Fig. 4a

| n | k+n | w |
|---|-----|---|
| 0 | 6 | 1(infinite) |
| 1 | 7 | 0.84 |
| 2 | 8 | 0.60 |
| 3 | 9 | 0.48 |
| ... | ... | ... |
| 16 | 22 | 0.14 |

Fig. 4b

Fig. 5

```
┌─────────┐
│  START  │
└─────────┘
     │
     ▼
┌──────────────────────────────────────────────┐
│   ACQUIRE BIG DATA INCLUDING INFORMATION ON   │
│    USER USING INTERIOR DESIGN SERVICE,        │
│ UIDENTIFICATION INFORMATION OF INTERIOR OBJECT│──S510
│    PLACED BY USER, AND OBJECT INFORMATION     │
│         INCLUDING STYLE OF OBJECT             │
└──────────────────────────────────────────────┘
     │
     ▼
┌──────────────────────────────────────────────┐
│ DETERMINE STYLE OF OBJECT PRE-PLACED IN VIRTUAL│──S520
│ SPACE BY FIRST USER USING INTERIOR DESIGN SERVICE│
└──────────────────────────────────────────────┘
     │
     ▼
┌──────────────────────────────────────────────┐
│   COUNT NUMBER OF PLACEMENTS OF OBJECT        │──S530
│    FOR EACH STYLE OF PRE-PLACED OBJECT        │
└──────────────────────────────────────────────┘
     │
     ▼
┌──────────────────────────────────────────────┐
│ ADJUST RECOMMENDATION RATIO OF EACH STYLE BASED│
│    ON NUMBER OF PLACEMENTS FOR EACH STYLE OF  │
│ PRE-PLACED OBJECT AND RECOMMEND PREDETERMINED │──S540
│    OBJECT WHEN INFORMATION ON PREDETERMINED   │
│     OBJECT NEWLY PLACED IN VIRTUAL SPACE OF   │
│           FIRST USER IS REQUESTED             │
└──────────────────────────────────────────────┘
     │
     ▼
┌─────────┐
│   END   │
└─────────┘
```

Fig. 6

## INTERNATIONAL SEARCH REPORT

| International application No. |
| --- |
| **PCT/KR2021/018932** |

| A. | CLASSIFICATION OF SUBJECT MATTER |
| --- | --- |

G06Q 50/08(2012.01)i; G06Q 30/06(2012.01)i; G06F 16/9035(2019.01)i; G06F 16/906(2019.01)i

According to International Patent Classification (IPC) or to both national classification and IPC

| B. | FIELDS SEARCHED |
| --- | --- |

Minimum documentation searched (classification system followed by classification symbols)

G06Q 50/08(2012.01); G06F 17/30(2006.01); G06F 17/50(2006.01); G06N 3/02(2006.01); G06Q 30/02(2012.01); G06Q 30/06(2012.01); H04B 17/19(2014.01); H04L 29/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인테리어 (interior), 데이터 (data), 스타일 (style), 가상 (virtual), 추천 (recommend)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2014-102767 A (DAIWA HOUSE INDUSTRY CO., LTD.) 05 June 2014 (2014-06-05)<br>See paragraphs [0026]-[0076]. | 1,5-12 |
| A | | 2-4 |
| Y | KR 10-2020-0103202 A (DONG-EUI UNIVERSITY INDUSTRY-ACADEMIC COOPERATION FOUNDATION) 02 September 2020 (2020-09-02)<br>See claim 1. | 1,5-12 |
| Y | KR 10-2019-0111548 A (CHO, So Young) 02 October 2019 (2019-10-02)<br>See paragraph [0058]. | 8-10 |
| A | KR 10-2019-0092914 A (JIN, Seung Hyuk) 08 August 2019 (2019-08-08)<br>See paragraphs [0029]-[0068]. | 1-12 |
| A | US 2018-0102858 A1 (CARRIER CORPORATION) 12 April 2018 (2018-04-12)<br>See claims 1-10. | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 April 2022** | **06 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/018932**

| Patent document cited in search report | | | Publication date (day/month/year) | Patent family member(s) | | | Publication date (day/month/year) |
|---|---|---|---|---|---|---|---|
| JP | 2014-102767 | A | 05 June 2014 | None | | | |
| KR | 10-2020-0103202 | A | 02 September 2020 | KR | 10-2164814 | B1 | 13 October 2020 |
| KR | 10-2019-0111548 | A | 02 October 2019 | KR | 10-2101697 | B1 | 17 April 2020 |
| KR | 10-2019-0092914 | A | 08 August 2019 | None | | | |
| US | 2018-0102858 | A1 | 12 April 2018 | CN | 107646118 | A | 30 January 2018 |
| | | | | EP | 3274933 | A1 | 31 January 2018 |
| | | | | US | 10756830 | B2 | 25 August 2020 |
| | | | | WO | 2016-154320 | A1 | 29 September 2016 |

Form PCT/ISA/210 (patent family annex) (July 2019)